# EUROPÄISCHE PATENTANMELDUNG

(11) **EP 0 779 502 A2**
(43) Veröffentlichungstag der Anmeldung: **18.06.1997**
(21) Anmeldenummer: 96119829.8
(22) Anmeldetag: 11.12.1996
(51) Int. Cl.: G01G 11/00

(54) **Dosiereinrichtung für Schüttgut**

(30) Priorität: 14.12.1995 DE 19546626
(71) Anmelder: Schenck Process GmbH, 64293 Darmstadt (DE)
(72) Erfinder: Allenberg, Bernd, Dr., 64254 Reinheim (DE)

(57) **Zusammenfassung**

bei einer Einrichtung zur Dosierung von Schüttgut, das in ungleichmäßiger Fördermenge über ein Zubringerband (1) angeliefert und von diesem auf ein Speicherband (2) abgeworfen wird, wobei das Abwurfende (6) des Zubringerbandes (1) gegenüber dem Speicherband (2) verstellbar ist und die jeweilige Stellung des Abwurfendes (6) des Zubringerbandes (1) in Abhängigkeit von einer gemessenen Bandbeladung (q1) regelbar ist, ist die Meßeinrichtung (10) zur Erfassung der Bandbeladung (q1) am Zubringerband (1) angeordnet und mittels einer Recheneinrichtung (11) wird aus der gemessenen Bandbeladung (q1), der Bandgeschwindigkeit (v1) des Zubringerbandes (1) oder des stationären Bandes (5) und der Laufzeit des Schüttguts von der Meßeinrichtung (10) bis zur Abwurfstelle (6) des Zubringerbandes (1) die Förderleistung (P1z) an der Abwurfstelle (6) berechnet. In Abhängigkeit von der berechneten Förderleistung (P1z) erfolgt die Regelung der Stellung (x3) des Abwurfendes (6) des Zubringerbandes (1).

## Beschreibung

Die Erfindung betrifft eine Einrichtung zur Dosierung von Schüttgut, das in ungleichmäßiger Fördermenge über ein Zubringerband angeliefert und von diesem auf ein Speicherband abgeworfen wird, wobei das Abwurfende des Zubringerbandes gegenüber dem Speicherband verstellbar ist und die jeweilige Stellung des Abwurfendes des Zubringerbandes in Abhängigkeit von einer gemessenen Bandbeladung regelbar ist.

Eine Dosiereinrichtung der angegebenen Art ist aus der DE-PS 13 03 845 und der DE-PS 16 48 128 bekannt. Bei der bekannten Einrichtung wird mit Hilfe einer Wägebrücke die Bandbeladung des Speicherbandes erfaßt. Die Wägebrücke ist unterhalb des Abwurfendes des Zubringerbandes angeordnet und gemeinsam mit diesem verfahrbar. Dies führt zu einem hohen gerätetechnischen Aufwand an der Abgabestelle für das Schüttgut auf das Speicherband.

Der Erfindung liegt die Aufgabe zugrunde, bei einer Dosiereinrichtung der eingangs genannten Art den gerätetechnischen Aufwand zu verringern.

Erfindungsgemäß wird diese Aufgabe dadurch gelöst, daß die Meßeinrichtung zur Erfassung der Bandbeladung am Zubringerband oder an einem diesem vorgeschalteten, stationären Band angeordnet ist, daß mittels einer Recheneinrichtung aus der gemessenen Bandbeladung, der Bandgeschwindigkeit des Zubringerbandes oder des stationären Bandes und der Laufzeit des Schüttguts von der Meßeinrichtung bis zur Abwurfstelle des Zubringerbandes die Förderleistung an der Abwurfstelle berechnet wird und daß die Regelung der Stellung des Abwurfendes des Zubringerbandes in Abhängigkeit von der berechneten Förderleistung erfolgt.

Durch die Anordnung der Meßeinrichtung zur Messung der Bandbeladung, beispielsweise einer Bandwaage, rm verfahrbaren Zuführband oder in einem dem Zuführband vorgeschalteten stationären Band wird der Bauaufwand der Dosiereinrichtung erheblich verringert. Die Anordnung der Bandwaage in einem stationären Band hat darüberhinaus den Vorteil, daß die Meßgenauigkeit größer und der Verkabelungsaufwand geringer ist.

Die Recheneinrichtung kann erfindungsgemäß so gestaltet sein, daß aus der Bandbeladung und der Bandgeschwindigkeit des Zubringerbandes oder des stationären Bandes ein der Förderleistung über die Meßeinrichtung entsprechendes Signal gebildet wird und daß dieses Signal um die aus der Bandgeschwindigkeit errechneten Laufzeit von der Meßeinrichtung bis zur Abwurfstelle des Zubringerbandes verzögert wird.

Zur Bildung der Regelgröße für die Regelung der Stellung des Abwurfendes des Zubringerbandes kann erfindungsgemäß von einer Recheneinheit aus der Sollbeladung des Speicherbandes und dem verzögerten Förderleistungssignal die Differenzgeschwindigkeit zwischen der Bandgeschwindigkeit des Speicherbandes und der Bandgeschwindigkeit des Zubringerbandes berechnet werden. Aus der berechneten Differenzgeschwindigkeit und der Geschwindigkeit des Speicherbandes kann dann von einer weiteren Recheneinheit die Absolutgeschwindigkeit der Transportstrecke über das Zubringerband und mit Hilfe einer Integrationseinrichtung aus der Absolutgeschwindigkeit die Sollposition des Abwurfendes des Zubringerbandes errechnet und als Regelgröße einer Lageregelung aufgegeben werden.

Die Abzugsleistung der das Zubringerband beschickenden Fördereinrichtung kann erfindungsgemäß in Abhängigkeit von der Stellung des Abwurfendes des Zubringerbandes, der Sollförderstärke der dem Speicherband nachgeschalteten Dosierwaage und einer vorgegebenen Optimalposition für das Abwurfende des Zubringerbandes geregelt werden, wobei die Optimalposition so gewählt ist, daß das Speicherband möglichst gut gefüllt ist.

Die Erfindung wird nachfolgend anhand von Ausführungsbeispielen näher beschrieben, die in der Zeichnung dargestellt ist. Es zeigen
- Figur 1: eine schematische Darstellung einer erfindungsgemäßen Dosiereinrichtung mit einer im Zubringerband angeordneten Bandwaage,
- Figur 2: ein Blockschaltbild der Einrichtung zur Berechnung der Regelgröße für die Dosiereinrichtung gemäß Figur 1,
- Figur 3: eine schematische Darstellung einer erfindungsgemäßen Dosiereinrichtung, bei der die Bandwaage in einem dem Zubringerband vorgeschalteten stationären Band angeordnet ist und
- Figur 4: ein Blockschaltbild einer Meßwertverarbeitung für die Dosiereinrichtung gemäß Figur 3.

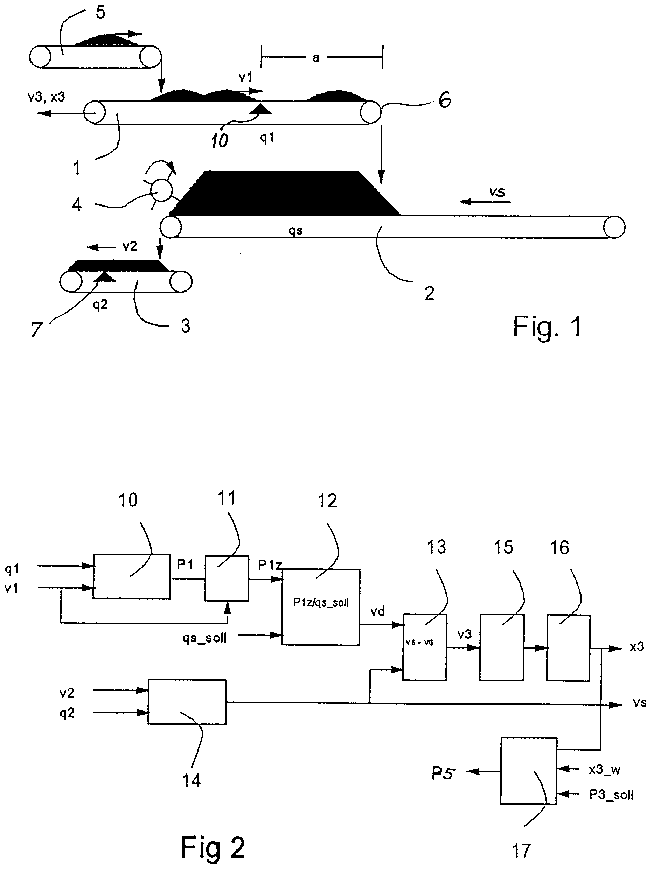

Bei der in Figur 1 dargestellten Dosiereinrichtung wird Schüttgut von einer Abzugseinrichtung 5 auf ein mit fester Drehzahl laufendes, in seiner Gesamtheit horizontal verfahrbares Zubringerband 1 geschüttet. Die Förderleistung der Abzugseinrichtung 5 ist zeitlich sehr unterschiedlich, was sich auch auf dem Zubringerband 1 abbildet. An dem Zubringerband 1 befindet sich in einem festen Abstand a von seinem Abwurfende 6 die Wägebrücke einer Bandwaage 10 zur Erfassung der Bandbeladung q1 des Zubringerbandes 1. Von dem Zubringerband 1 wird das Schüttgut auf ein Speicherband 2 abgeworfen. An der Abwurfstelle des Speicherbandes 2 befindet sich eine Abschlageinrichtung 4, z.B. eine rotierende Stachelwalze, die dafür sorgt, daß das Schüttgut das Speicherband 2 möglichst gleichmäßig verläßt. Dem Speicherband 2 ist ein Dosierband 3 nachgeschaltet, dessen Beladung q2 von einer Bandwaage 7 gemessen wird.

Die in Figur 1 dargestellte Dosiereinrichtung wird mit Hilfe einer Regeleinrichtung gemäß Figur 2 wie folgt geregelt. Die Bandwaage 10 berechnet aus der Bandbeladung q1 und der Bandgeschwindigkeit v1 des Zubringerbandes 1 die Förderleistung P1 über die Wägebrücke. Das Förderleistungssignal P1 wird von einer Verzögerungseinrichtung 11 entsprechend der aus der Bandgeschwindigkeit v1 berechneten Laufzeit über die Strecke a von der Wägebrücke bis zur Abwurfstelle 6 verzögert. Aus dem verzögerten Förderleistungssignal P1z und der Sollbeladung qs_soll des Speicherbandes 2 errechnet eine Recheneinheit 12, die erforderliche Differenzgeschwindigkeit vd zwischen der Bandgeschwindigkeit vs des Speicherbandes 2 und der Bandgeschwindigkeit v1 des Zubringerbandes 1. Eine weitere Recheneinheit 13 errechnet mit Hilfe der Differenzgeschwindigkeit vd und der Bandgeschwindigkeit vs des Speicherbandes 2 die erforderliche Absolutgeschwindigkeit v3 der von dem Zubringerband 1 gebildeten Transportstrecke. Aus der Absolutgeschwindigkeit v3 wird von einer Integrationseinrichtung 15 die Sollstellung x3_soll des Abwurfendes 6 des Zubringerbandes 1 errechnet. Mittels einer Lageregelung 16 wird die tatsächliche Stellung x3 des Abwurfendes 6 in die Sollstellung x3_soll geregelt.

Die Förderleistung des Dosierbandes 3 wird über die Veränderung seiner Bandgeschwindigkeit v2 geregelt. Die hierzu erforderliche gleichmäßige Beladung q2 des Dosierbandes 3 wird mit einer Blockregelung 14 über die Bandgeschwindigkeit vs des Speicherbandes 2 geregelt. Die Blockregelung 14 verarbeitet als Eingangsgröße die Bandgeschwindigkeit v2 und die über die Wägebrücke 7 der Bandwaage gemessene Bandbeladung q2.

Zur Begrenzung der Verfahrwege des Zubringerbandes 1 und der Baugröße des Speicherbandes 2 wird die Abzugsleistung der Abzugseinrichtung 5 von einem Regler 17 in Abhängigkeit von der tatsächlichen Lage x3 des Abwurfendes 6 des Zubringerbandes 1, einer Optimalposition x3_w des Abwurfendes 6 und der vom Prozeß geforderten Sollförderleistung P3_soll des Dosierbandes 3 geregelt. Die Optimalposition x3_w wird hierbei so gewählt, daß das Speicherband 2 möglichst gut gefüllt ist.

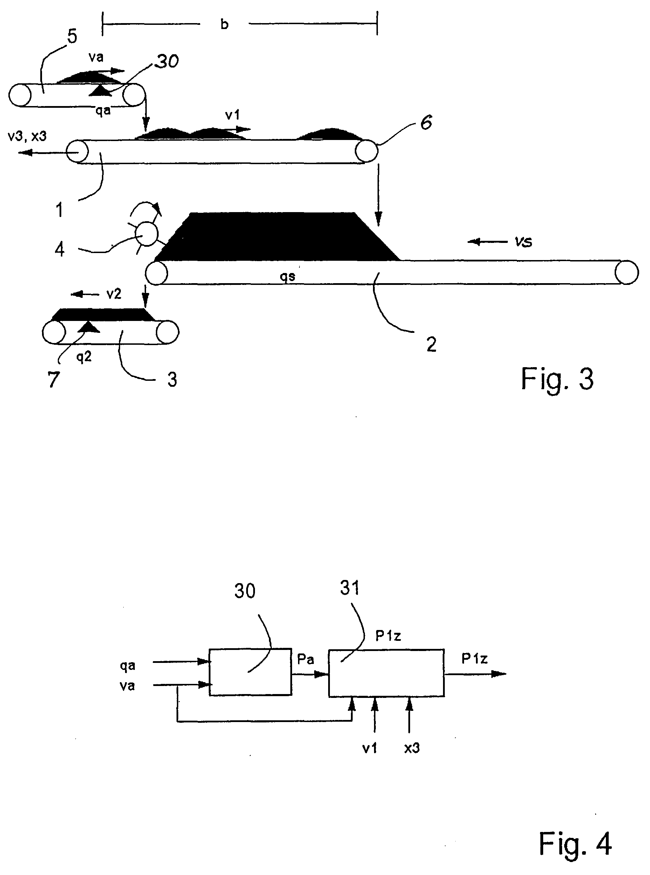

Bei dem Ausführungsbeispiel gemäß Figur 3 befindet sich die Wägebrücke einer Bandwaage 30 in einem stationären Band 5 der Abzugseinrichtung, das dem verfahrbaren Zubringerband 1 vorgeschaltet ist. Am Zubringerband 1 ist stattdessen keine Wägebrücke vorgesehen. Die weitere Ausgestaltung der Dosiereinrichtung stimmt mit dem Ausführungsbeispiel gemäß Figur 1 überein.

Figur 4 zeigt die gegenüber Figur 2 abweichende Ausgestaltung der Regeleinrichtung. Die Bandwaage 30 errechnet aus der Bandbeladung qa und der Bandgeschwindigkeit va des stationären Bandes 5 die Förderleistung Pa über die Wägebrücke. Eine Verzögerungseinrichtung 31 verzögert das Förderleistungssignal Pa so lange, bis das Schüttgut die Strecke b von der Wägebrücke der Bandwaage 30 bis zur Abwurfstelle 6 des Zubringerbandes 1 zurückgelegt hat. Zur Berechnung der Verzögerungszeit werden die Bandgeschwindigkeiten va des Bandes 5 und v1 des Zubringerbandes 1, sowie die jeweilige Lage x3 des Abwurfendes 6 des Zubringerbandes 1 verwendet. Die weitere Verarbeitung des verzögerten Förderleistungssignals P1z, das der Abwurfleistung des Zubringerbandes 1 entspricht, erfolgt in der bereits beschriebenen Weise gemäß Figur 2.

Durch die Länge des Speicherbandes 2 gegebene Grenzlagen x3-grenz des Abwurfendes 6 des Zubringerbandes 1 werden durch zusätzliche Steuerfunktionen der Regeleinrichtung berücksichtigt. Wird die Sollstellung x3_soll des Abwurfendes 6 als zu groß errechnet, d.h. das Speicherband 2 ist nahezu leer, so wird durch einen Eingriff in die Integrationseinrichtung 15 und die Lageregelung 16 das Zubringerband 1 in dieser maximalen Stellung festgehalten. Alle anderen Einrichtung arbeiten wie zuvor beschrieben. Wird die Sollstellung x3_soll als zu klein errechnet, d.h. das Speicherband 2 ist vollständig gefüllt, so setzt eine Einrichtung die Abzugseinrichtung 5 und das Zubringerband 1 still. Die Lageregelung 16 für das Zubringerband 1 bleibt weiterhin in Funktion.

Zum Anfahren der beschriebenen Dosiereinrichtung weist die Regeleinrichtung weiterhin Sonderfunktionen auf. Für die a priori nicht bekannte, richtige Stellung x3 des Abwurfendes 6 des Zubringerbandes 1 beim Start werden folgende Fälle unterschieden:
a) Anfahren nach einem störungsbedingten Ausfall
   Nach einem störungsbedingten Ausfall, d.h. Stillsetzen der Bandstrecken wegen eines Fehlers, bleiben alle Bänder gleichzeitig stehen. Dies wird von der Verzögerungseinrichtung 11 bzw. 31 anhand der eingegebenen Bandgeschwindigkeiten und der konstanten Stellung x3 des Abwurfendes 6 bemerkt und führt zu einem Anhalten der Signalverzögerung. Bei einem erneuten Start läuft alles an der angehaltenen Stelle selbständig und korrekt weiter.
b) Erstmaliges Anfahren bzw. Anfahren mit leeren Bändern
   Das Anfahren mit leeren Bändern wird der Steuerung der Dosiereinrichtung mitgeteilt. Hierdurch wird das Zubringerband 1 in eine Startposition gefahren, in der das Ahwurfende 6 des Zubringerbandes 1 möglichst nahe am Abwurfende des Speicherbandes 2 liegt. Durch die Verzögerung des Förderleistungssignals der Bandwaagen 10 bzw. 30 beginnen die Regeleinrichtungen erst dann zu arbeiten, wenn das Schüttgut die Abwurfstelle 6 von Band 1 erreicht.
c) Anfahren unter unbekannten Bedingungen
   Ist beim Anfahren die Beladung des Speicherbandes 2 nicht bekannt, so wird das Zubringerband 1 von Hand so lange verfahren, bis seine Abwurfstelle 6 über dem Ende des Materialbelags auf dem Speicherband 2 liegt. Anschließend kann wie nach einem Ausfall gemäß Abschnitt a) gestartet werden. Das Anfahren der korrekten Startposition kann auch mittels selbsttätig arbeitender Sensoren, z.B. Ultraschallsensoren, automatisiert werden.

## Patentansprüche

1. Einrichtung zur Dosierung von Schüttgut, das in ungleichmäßiger Fördermenge über ein Zubringerband angeliefert und von diesem auf ein Speicherband abgeworfen wird, wobei das Abwurfende des Zubringerbandes gegenüber dem Speicherband verstellbar ist und die jeweilige Stellung des Abwurfendes des Zubringerbandes in Abhängigkeit von einer gemessenen Bandbeladung regelbar ist, **dadurch gekennzeichnet,** daß die Meßeinrichtung (10 bzw. 30) zur Erfassung der Bandbeladung (q1 bzw. qa) am Zubringerband (1) oder an einem diesem vorgeschalteten, stationären Band (5) angeordnet ist, daß mittels einer Recheneinrichtung (11 bzw. 31) aus der gemessenen Bandbeladung (q1 bzw. qa), der Bandgeschwindigkeit (v1 bzw. va) des Zubringerbandes (1) oder des stationären Bandes (5) und der Laufzeit des Schüttguts von der Meßeinrichtung (10 bzw. 31) bis zur Abwurfstelle (6) des Zubringerbandes (1) die Förderleistung (P1z) an der Abwurfstelle (6) berechnet wird und daß die Regelung der Stellung des Abwurfendes (6) des Zubringerbandes (1) in Abhängigkeit von der berechneten Förderleistung (P1z) erfolgt.

2. Dosiereinrichtung nach Anspruch 1, dadurch gekennzeichnet, daß von der Recheneinrichtung ein der Förderleistung über die Meßeinrichtung entsprechendes Signal (P1 bzw. Pa) um die aus der Bandgeschwindigkeit (v1 bzw. va) errechnete Laufzeit von der Meßeinrichtung bis zur Abwurfstelle (6) des Zubringerbandes (1) verzögert wird.

3. Dosiereinrichtung nach einem der Ansprüche 1 oder 2, dadurch gekennzeichnet, daß von einer Recheneinheit aus der Sollbeladung (qs) des Speicherbandes (2) und der Förderleistung (P1z) an der Abwurfstelle (6) die Differenzgeschwindigkeit (vd) zwischen der Bandgeschwindigkeit (vs) des Speicherbandes und der Bandgeschwindigkeit (v1) des Zubringerbandes (1) berechnet wird.

4. Dosiereinrichtung nach Anspruch 3, dadurch gekennzeichnet, daß aus der berechneten Differenzgeschwindigkeit (vd) und der Bandgeschwindigkeit (vs) des Speicherbandes (2) von einer weiteren Recheneinheit (13) die Absolutgeschwindigkeit (v3) der Transportstrecke über das Zubringerband (1) und mit Hilfe einer Integrationseinrichtung (15) aus der Absolutgeschwindigkeit (v3) die Sollposition (x3_soll) des Abwurfendes (6) des Zubringerbandes (1) errechnet und als Regelgröße einer Lageregelung (16) aufgegeben wird.

5. Dosiereinrichtung nach einem der vorhergehenden Ansprüche, dadurch gekennzeichnet, daß die Abzugsleistung der das Zubringerband (1) beschickenden Fördereinrichtung (5) in Abhängigkeit von der Stellung (x3) des Abwurfendes (6) des Zubringerbandes (1), der Sollförderleistung (P3_soll) der dem Speicherband nachgeschalteten Dosierwaage (3) und einer vorgegebenen Optimalposition (x3_w) für das Abwurfende (6) des Zubringerbandes (1) geregelt wird, wobei die Optimalposition (x3_w) so gewählt ist, daß das Speicherband möglichst gut gefüllt ist.

6. Dosiereinrichtung nach einem der vorhergehenden Ansprüche, dadurch gekennzeichnet, daß bei einem störungsbedingten Stillsetzen der Bandstrecken die Verzögerung des Förderleistungssignals angehalten wird.

7. Dosiereinrichtung nach einem der vorhergehenden Ansprüche, dadurch gekennzeichnet, daß die Regeleinrichtung das Zubringerband (1) stillsetzt, wenn das Abwurfende (6) des Zubringerbands (1) die Endstellung (x3_grenz) bei gefülltem Speicherband (2) erreicht.
